(19) Europäisches Patentamt

European Patent Office

Office européen des brevets

(11) Veröffentlichungsnummer : **0 357 985 B1**

(12) **EUROPÄISCHE PATENTSCHRIFT**

(45) Veröffentlichungstag der Patentschrift :
**22.04.92 Patentblatt 92/17**

(51) Int. Cl.⁵ : **F16B 7/04, E06B 3/96**

(21) Anmeldenummer : **89114706.8**

(22) Anmeldetag : **09.08.89**

(54) **Verbindung zweier winklig zueinander verlaufender oder fluchtender Profilschienen.**

(30) Priorität : **17.08.88 DE 3827844**

(43) Veröffentlichungstag der Anmeldung :
**14.03.90 Patentblatt 90/11**

(45) Bekanntmachung des Hinweises auf die
Patenterteilung :
**22.04.92 Patentblatt 92/17**

(84) Benannte Vertragsstaaten :
**AT BE CH DE FR GB LI LU NL SE**

(56) Entgegenhaltungen :
**DE-A- 2 624 273**
**FR-A- 1 556 758**
**US-A- 3 458 052**

(73) Patentinhaber : **SCHÜCO International KG**
**Karolinenstrasse 1-15**
**W-4800 Bielefeld 1 (DE)**

(72) Erfinder : **Diekmann, Bernd, Dipl.-Ing.**
**Oldendorfer Strasse 11**
**W-4202 Halle (DE)**

(74) Vertreter : **Stracke, Alexander, Dipl.-Ing. et al**
**Jöllenbecker Strasse 164**
**W-4800 Bielefeld 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Verbindung zweier winklig zueinander verlaufender oder fluchtender Profilschienen mit einem die Verbindungsfuge zwischen den Profilschienen übergreifenden Verbindungsbeschlag, wobei der Verbindungsbeschlag mindestens einen in einer zylindrischen, nach außen geöffneten Ausnehmung einer Profilschiene drehbar gelagerten Spannexzenter aufweist.

Es ist eine Verbindung zweier winklig zueinander verlaufender Profilschienen dieser Art bekannt (US-A-3 458 052, Fig. 17 bis 19), bei der der Exzenterbolzen des Spannexzenters in einer Querbohrung eines stangenförmigen, die Verbindungsfuge übergreifenden Verbindungsmittels angeordnet ist. Eine Einstellbarkeit des stangenförmigen Verbindungsmittels gegenüber dem Spannexzenter ist nicht gegeben. Der Exzenterbolzen ist mit zwei Endscheiben ausgerüstet, von denen eine mit dem Exzenterbolzen einstückig und die andere demontierbar ausgebildet ist.

Der Erfindung liegt die Aufgabe zugrunde, eine Verbindung der genannten Art so zu gestalten, daß die wirksame Länge des stangenförmigen Verbindungsmittels des Verbindungsbeschlages gegenüber dem Spannexzenter und damit die vom Spannexzender erzeugte Spannkraft einstellbar und der Verbindungsbeschlag einfach in die zu verbindenden Profilschienen einzusetzen und zu bedienen ist.

Diese Aufgabe wird nach der Erfindung dadurch gelöst, daß der Spannexzenter aus zwei durch eine gegenüber der Exzentermitte versetzte Brücke verbundenen, mit einer exzentrisch angeordneten Aufnahmebohrung für einen das Gewindeende einer Hammerkopfschraube oder einer sonstigen Verbindungsstange aufnehmenden Mutterbolzen versehenen Scheiben besteht, wobei die Scheiben und die Brücke des Spannexzenters U-förmig eine zum Umfang des Spannexzenters geöffnete Aussparung begrenzen, in die sich der Schaft der Hammerkopfschraube oder der Verbindungsstange erstreckt.

Durch das Eindrehen des Gewindeendes der Hammerkopfschraube oder einer sonstigen Verbindungsstange in den Mutterbolzen des Spannexzenters wird die wirksame Länge der Hammerkopfschraube oder der Verbindungsstange verkürzt und die durch den Exzenter erzeugte Spannkraft erhöht.

Bei einer vorteilhaften Ausführungsform einer erfindungsgemäßen Eck- oder Stoßverbindung zweier Profilschienen weisen diese mindestens eine sich über die gesamte Profillänge erstreckende, im Querschnitt T-förmige, hinterschnittene, nach außen geöffnete Nut auf, wobei die Bautiefe des die Hinterschneidung bildenden Innenteils der Nut dem Durchmesser des Schaftes der Hammerkopfschraube oder der Verbindungsstange entspricht. Das Innenteil der T-förmigen Nut nimmt den Schaft der Hammerkopfschraube bzw. die Verbindungsstange auf, so daß bei einer winkligen Verbindung zweier Profilschienen mittels einer Hammerkopfschraube ausschließlich eine Sackbohrung in die Profilschiene eingebracht zu werden braucht, in die der Spannexzenter eingeführt wird.

Bei einer fluchtenden Verbindung zweier Profilschienen dieser Art muß jede Profilschiene mit einer Sackbohrung für einen Spannexzenter ausgerüstet werden. Zwischen den Mutterbolzen der beiden Spannexzenter ist bei dieser Verbindung eine Verbindungsstange vorgesehen.

Die exakte Ausrichtung der Profilschienen zueinander erfolgt in diesem Fall durch zusätzliche Mittel, z.B. unter Verwendung von in den Profilschienen vorgesehenen zentralen und/oder im Eckbereich angeordneten Längsbohrungen.

Aus den Profilschienen werden unter Verwendung der Verbindungsbeschläge vorzugsweise Maschinengrundgestelle sowie Montagearbeitsplätze hergestellt.

Weitere Merkmale der Erfindung ergeben sich aus den Unteransprüchen und der folgenden Beschreibung von in den Zeichnungen dargestellten Ausführungsbeispielen.

Es zeigen:

Fig. 1 einen mit einer Hammerkopfschraube ausgerüsteten Verbindungsbeschlag im Aufriß,

Fig. 2 einen Schnitt nach der Linie II-II,

Fig. 3 einen Schnitt nach der Linie III-III in Fig. 1,

Fig. 4 eine Ansicht in Richtung des Pfeiles IV in Fig. 1,

Fig. 5 den in den Fig. 1 und 3 aufgezeigten Spannexzenter im Grundriß,

Fig. 6 eine Ansicht in Richtung des Pfeiles VI in Fig. 5,

Fig. 7 eine Ansicht in Richtung des Pfeiles VII in Fig. 6,

Fig. 8 eine Stoßverbindung zwischen zwei rechtwinklig zueinander verlaufenden Profilschienen, und zwar teilweise geschnitten, und

Fig. 9 eine Profilschiene im Schnitt mit strichpunktiert aufgezeigter Lage einiger Teile des Verbindungsbeschlages.

Der Verbindungsbeschlag, der in den Zeichnungen dargestellt ist, weist einen Spannexzenter 1 auf, der aus zwei Scheiben 2,3 besteht, die über eine gegenüber der Exzentermitte versetzte Brücke 4 miteinander verbunden sind. Aus den Darstellungen ergibt sich daß der Spannexzenter als Zylinderstück ausgebildet ist, das in einer zylindrischen, nach außen geöffneten Ausnehmung 5 einer Profilschiene 6 drehbar gelagert ist.

Die Scheiben 2 und 3 des Spannexzenters weisen eine exzenterisch angeordnete Aufnahmebohrung 7 für einen Mutterbolzen 8 auf, der mit einer Gewindebohrung 9 ausgerüstet ist, in die das Gewindeende 10 des Schaftes 11 einer Hammerkopfschraube 12 oder das Gewindeende einer Verbindungsstange eingeschraubt wird.

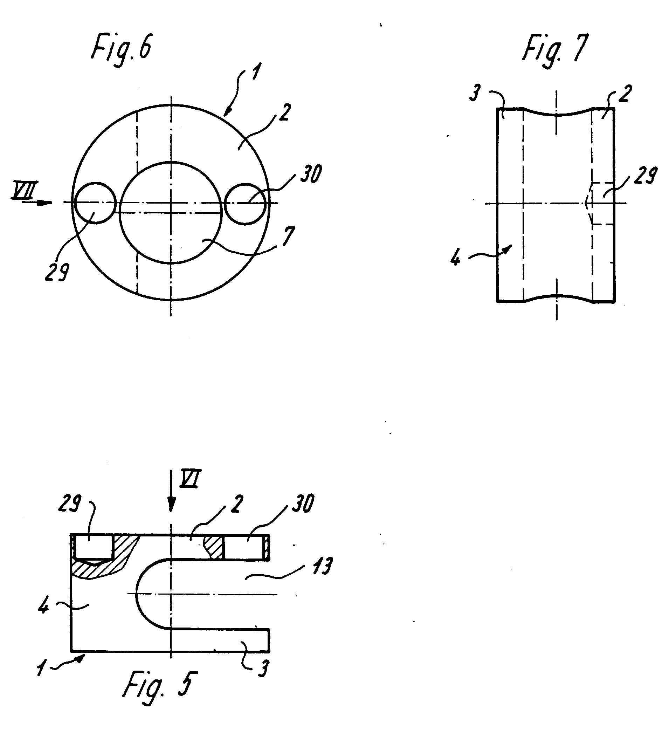

Aus der Fig. 5 ergibt sich, daß die Scheiben 2,3 und die Brücke 4 des Spannexzenters 1 U-förmig eine zum Umfang des Spannexzenters geöffnete Aussparung 13 begrenzen, die mittels eines Fräsers in den Spannexzenter eingearbeitet wird und in die sich der Schaft 11 der Hammerkopfschraube 12 oder die Verbindungsstange erstreckt.

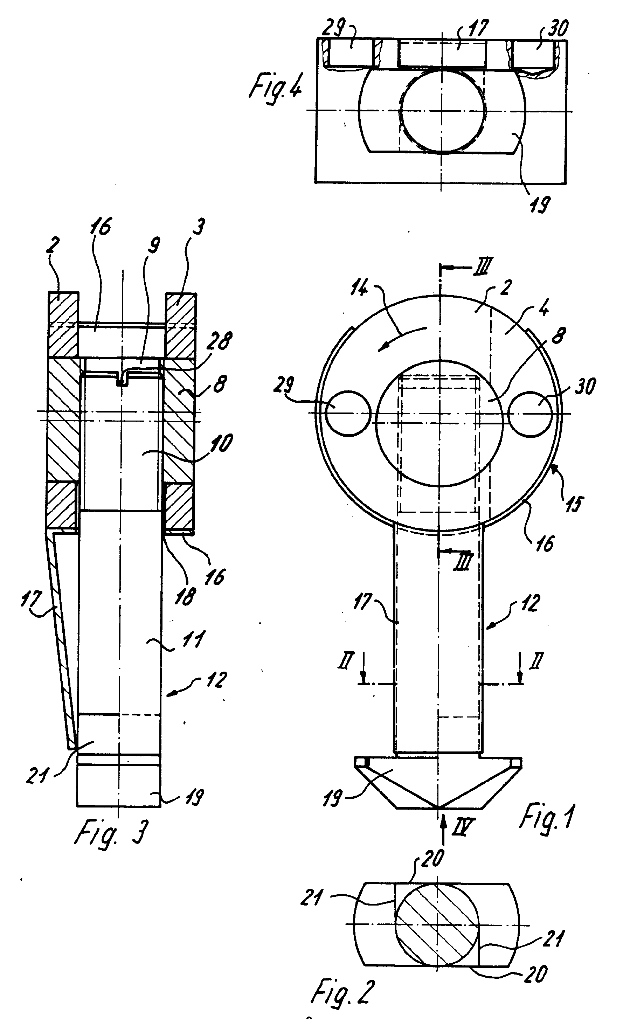

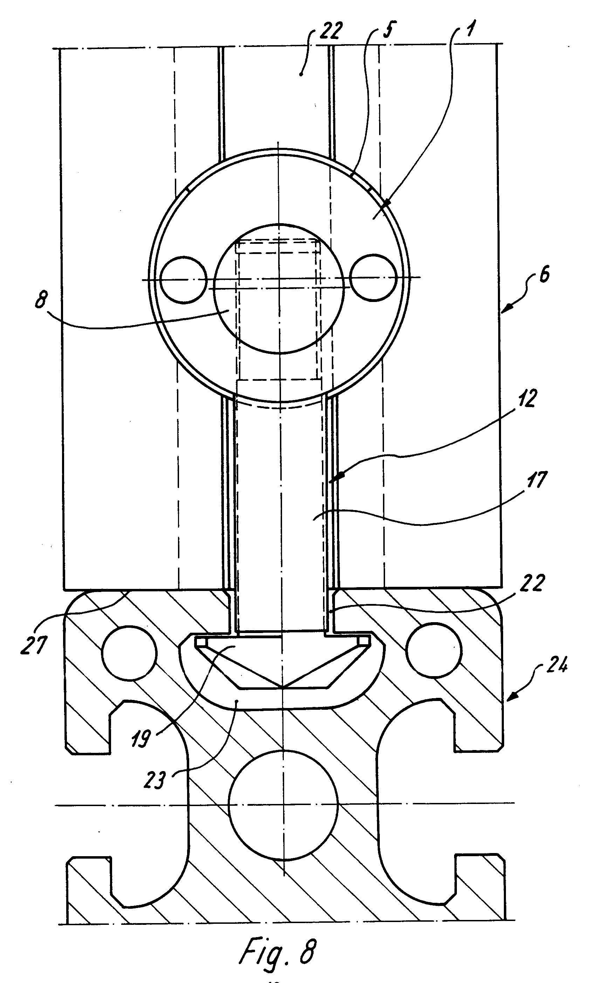

In der Fig. 1 und in der Fig. 8 ist der Spannexzenter im ungespannten Zustand dargestellt. Zum Spannen wird der Exzenter in Richtung des Pfeiles 14 bewegt. Die Aussparung 13 ermöglicht eine Drehbewegung des Spannexzenters von der in der Fig. 1 aufgezeigten Stellung in Richtung des Pfeiles 14 um 180°.

In dem aufgezeigten Ausführungsbeispiel ist dem Spannexzenter 1 und der Hammerkopfschraube 12 ein Formkörper 15 aus Blech zugeordnet, der aus einem Teilzylinder 16 und einer Arretierlasche 17 besteht. Der Teilzylinder 16 umgreift den Spannexzenter 1 teilweise. In dem dargestellten Ausführungsbeispiel weist der Teilzylinder 16 einen Umschlingungswinkel von 270° auf. Im Scheitelbereich des Teilzylinders ist eine Durchsteckbohrung 18 für den Schaft 11 der Hammerkopfschraube 12 vorgesehen. Benachbart der Bohrung 18 erstreckt sich die Arretierlasche 17 vom Außenrand des Teilzylinders 16 aus und verläuft in einem spitzen Winkel in Richtung auf die Hammerkopfschraube 12. Die Arretierlasche stützt sich mit ihrem freien Ende unterhalb des Kopfes 19 der Hammerkopfschraube an einer Anschlagfläche 20 bzw. 21 der Hammerkopfschraube ab, die unmittelbar unterhalb des Hammerkopfes 19 am Schaft 11 vorgesehen sind. An dieser Anschlagflächen liegt je nach der Betriebsstellung der Hammerkopfschraube die Arretierlasche 17 mit ihrem freien Ende, und zwar unter Vorspannung an, so daß die Arretierlasche dazu beiträgt, die Hammerkopfschraube in der jeweiligen Betriebslage zu fixieren.

Die Arretierlasche 17 ist im Aufriß rechteckförmig ausgebildet. Die Breite der Arretierlasche 17 entspricht der Breite des Außenteils 22 einer sich über die gesamte Länge der Profilschiene 6 erstreckenden T-förmigen Nut, die auch ein mit einer Hinterschneidung versehenes Innenteil 23 aufweist.

Die Profilschiene 6 und auch die mit der Profilschiene 6 mittels des Verbindungsbeschlages verbundene Profilschiene 24 weisen vier T-förmige hinterschnittene Nuten 22,23 auf, die sich über die gesamte Länge der als Strangpreßprofil ausgebildeten und vorzugsweise aus Aluminium gefertigten Profilschiene erstrecken.

Ferner sind diese Profilschienen mit einer mittigen in Längsrichtung verlaufenden Bohrung 25 und mit im Eckbereich vorgesehenen Bohrungen 26 ausgerüstet. Der Gesamtquerschnitt der Profilschienen ist rechteckförmig, wobei die Profilschienen als Strangpreßprofile ausgebildet und vorzugsweise aus Aluminium gefertigt sind.

Aus der Fig. 8 ergibt sich, daß die Arretierlasche 17 nicht nur in den Außenteil 22 der T-förmigen Nut der Profilschiene sondern auch in den Außenteil 22 der T-förmigen Nut der Profilschienen 24 eingreift und sich über die Verbindungsfuge 27 erstreckt. Hierdurch erfolgt eine Ausrichtung der Profilschienen 6 und 24 im Bereich der Stoßverbindung.

Die Arretierlasche 17 dient auch dazu, einen Anschlag bzw. einen Maßstab für die Voreinstellung des Verbindungsbeschlages zu bilden.

Die Hammerkopfschraube 12 entspricht im wesentlichen der genormten Ausführung und ist hinsichtlich der Abmaße der Schaftlänge und der Gewindelänge auf den Einbaufall des Systems abgestimmt.

Die Stirnfläche des Schaftendes der Hammerkopfschraube 12 ist mit einem Schlitz 28 oder mit einem Innenmehrkant zum Ansetzen eines Betätigungswerkzeuges ausgestattet. Durch dieses Werkzeug wird die Hammerkopfschraube, nachdem der Verbindungsbeschlag in die Profilschiene 6 eingesetzt und der Hammerkopf 19 in den Innenteil 23 der T-förmigen Nut der Profilschiene 24 eingeführt wurde, um 90° gedreht, so daß der Hammerkopf die in der Fig. 8 aufgezeigte Stellung einnimmt. Es wird dann der Spannexzenter 1 angezogen, d.h. in Richtung des Pfeiles 14 gedreht. Zu diesem Zweck weist die Scheibe 2 des Spannexzenters zwei diametral gegenüberliegende Bohrungen 29,30 zur Aufnahme der Zapfen eines Zapfenschlüssels auf, mit dem der Spannexzenter in der Ausnehmung 5 gedreht werden kann.

Bei dem Eindrehen des Hammerkopfes in den Innenteil 23 der T-förmigen Nut der Profilschiene 24 wird diese Drehung durch die Anschlagflächen 21 beendet, die mit den Innenflächen des Außenteils 22 der T-förmigen Nut der Profilschiene 24 zusammenwirken.

Beim Anziehen des Spannexzenters in Richtung des Pfeiles 24 ergibt sich aufgrund der geringen Steigung des Exzenters eine selbsthemmende Verbindung mit einer entsprechend hohen Krafterzeugung.

Durch den den Spannexzenter umschließenden Teilzylinder 16 aus Blech wird eine gleichmäßige Kraftabtragung auf die Wandteile der Ausnehmung 5 erreicht.

Eine Relativbewegung zwischen dem Spannexzenter und der Profilschiene aus Aluminium, welche nachteilig ist, wird durch den Teilzylinder 16 vermieden. Die Reibpaarung zwischen dem Spannexzenter 1 und dem Teilzylinder 16 aus Blech kann den Erfordernissen angepaßt werden.

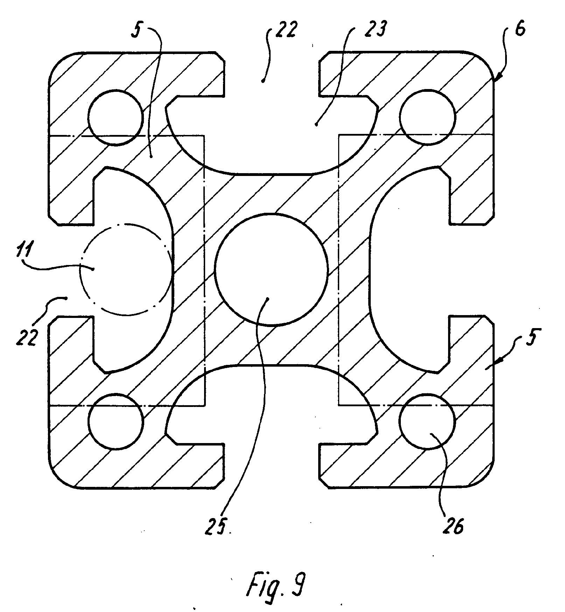

Aus der Fig. 9 ergibt sich, daß die Profilschiene 6 auch mit zwei Ausnehmungen 5 ausgerüstet werden kann, so daß also zur Erstellung der Verbindung mit der Profilschiene 24 auch zwei Verbindungsbeschläge eingesetzt werden können.

Die Ausnehmungen 5 (Sackbohrungen) können unter Verwendung einer Bohrlehre in einfacher Weise gefertigt werden.

Da die Hammerkopfschraube mit dem Hammerkopf 19 in eine hinterschnittene Nut von oben eingesetzt und anschließend in die Betriebsstellung gedreht wird, ist die Möglichkeit gegeben, die Verbindung an einer beliebigen Stelle der Profilschiene 24 vorzunehmen.

Bezugszeichen

1 Spannexzenter
2 Scheibe
3 Scheibe
4 Brücke
5 Ausnehmung
6 Profilschiene
7 Aufnahmebohrung
8 Mutterbolzen
9 Gewindebohrung
10 Gewindeende
11 Schaft
12 Hammerkopfschraube
13 Aussparung
14 Pfeil
15 Formkörper
16 Teilzylinder
17 Arretierlasche
18 Durchsteckbohrung
19 Hammerkopf
20 Anschlagfläche
21 Anschlagfläche
22 Außenteil
23 Innenteil
24 Profilschiene

**Patentansprüche**

1. Verbindung zweier winklig zueinander verlaufender oder fluchtender Profilschienen mit einem die Verbindungsfuge zwischen den Profilschienen übergreifenden Verbindungsbeschlag, wobei der Verbindungsbeschlag mindestens einen in einer zylindrischen, nach außen geöffneten Ausnehmung (5) einer Profilschiene (6) drehbar gelagerten Spannexzenter (1) aufweist, dadurch gekennzeichnet, daß der Spannexzenter (1) aus zwei durch eine gegenüber der Exzentermitte versetzte Brücke (4) verbundenen, mit einer exzentrisch angeordneten Aufnahmebohrung (7) für einen das Gewindeende (10) einer Hammerkopfschraube (12) oder einer sonstigen Verbindungsstange aufnehmenden Mutterbolzen (8) versehenen Scheiben (2,3) besteht, wobei die Scheiben und die Brücke des Spannexzenters U-förmig eine zum Umfang des Spannexzenters geöffnete Aussparung (13) begrenzen, in die sich der Schaft (11) der Hammerkopfschraube (12) oder der Verbindungsstange erstreckt.

2. Verbindung nach Anspruch 1, dadurch gekennzeichnet, daß dem Spannexzenter (1) und der Hammerkopfschraube (12) ein Formkörper (15) aus Blech zugeordnet ist, der mit einem Teilzylinder (16) den Spannexzenter (1) teilweise umgreift, wobei der Teilzylinder im Scheitelbereich eine Durchsteckbohrung (18) für den Schaft (11) der Hammerkopfschraube und benachbart der Bohrung eine Arretierlasche (17) aufweist, die sich mit ihrem freien Ende zum Schaft der Hammerkopfschraube (12) erstreckt.

3. Verbindung nach Anspruch 2, dadurch gekennzeichnet, daß der Teilzylinder (16) einen Umschlingungswinkel von 270° aufweist.

EP 0 357 985 B1

4. Verbindung nach Anspruch 2, dadurch gekennzeichnet, daß die Arretierlasche (17) vom Außenrand des Teilzylinders (16) ausgehend über die Verbindungsfuge zweier rechtwinklig miteinander verbundener Profil schienen (6,24) ragt und sich mit ihrem freien Ende bis unmittelbar unterhalb des Hammerkopfes (19) erstreckt.

5. Verbindung nach Anspruch 4, dadurch gekennzeichnet, daß die Arretierlasche (17) unter Vorspannung am Schaft der Hammerkopfschraube (12) anliegt.

6. Verbindung nach Anspruch 1, dadurch gekennzeichnet, daß die Hammerkopfschraube unmittelbar unterhalb des Hammerkopfes (19) mit Anschlagflächen (20,21) ausgerüstet ist, die die in einem Winkelabstand von 90° liegenden Endlagen der Hammerkopfschraube bestimmen.

7. Verbindung nach Anspruch 6, dadurch gekennzeichnet, daß das freie Ende der Arretierlasche (17) an einer Anschlagfläche (20,21) anliegt.

8. Verbindung nach Anspruch 2 und 4, dadurch gekennzeichnet, daß die Arretierungslasche (17) im Aufriß rechteckförmig ausgebildet ist.

9. Verbindung nach Anspruch 1, dadurch gekennzeichnet, daß die Stirnfläche des Schaftendes der Hammerkopfschraube (12) mit einem Schlitz (18) oder mit einem Innenmehrkant zum Ansetzen eines Betätigungswerkzeuges ausgestattet ist.

10. Verbindung nach Anspruch 1, dadurch gekennzeichnet, daß die Schiebe (2) des Spannexzenters (1) zwei diametral gegenüberliegende Bohrungen (29,30) zur Aufnahme der Zapfen eines Zapfenschlüssels zur Betätigung des Spannexzenters aufweist.

11. Verbindung nach Anspruch 1, dadurch gekennzeichnet, daß die Breite der durch eine Ausfräsung gebildeten Aussparung (13) des Spannexzenters (1) dem Außendurchmesser des Schaftes (11) der Hammerkopfschraube (12) entspricht.

12. Verbindung nach Anspruch 1, dadurch gekennzeichnet, daß die Profil schienen (6,24) mindestens eine sich über die gesamte Profillänge erstreckende, im Querschnitt T-förmige, hinterschnittene, nach außen geöffnete Nut (22,23) aufweisen.

13. Verbindung nach Anspruch 12, dadurch gekennzeichnet, daß der die Hinterschneidung bildende Innenteil (23) der T-förmigen Nut dem Durchmesser des Schaftes der Hammerkopfschraube oder der Verbindungsstange entspricht.

14. Verbindung nach einem der vorhergehenden Ansprüche, dadurch gekennzeichnet, daß die Profilschienen (6,24) zusätzlich zu der oder den T-förmigen nach außen geöffneten Nuten (22,23) eine mittige in Längsrichtung verlaufende Bohrung (25) und/oder in denEckbereichen vorgesehene, in Längsrichtung sich erstreckende Bohrungen (26) aufweisen.

**Claims**

1. A connection between two profile bars which are aligned or which extend at an angle relative to each other with a connecting fitment which extends over the junction between the profile bars, wherein the connecting fitment has at least one clamping eccentric (1) which is rotatably mounted in a cylindrical, outwardly open opening (5) in a profile bar (6), characterised in that the clamping eccentric (1) comprises two discs (2, 3) which are connected by a bridge (4) which is displaced with respect to the centre of the eccentric and which are provided with an eccentrically arranged receiving bore (7) for a female screw member (8) for receiving the screwthreaded end (10) of a hammer-head screw (12) or other connecting rod, wherein the discs and the bridge of the clamping eccentric define in a U-shaped configuration a recess (l3) which is open to the periphery of the clamping eccentric and into which extends the shank (11) of the hammer-head screw (l2) or the connecting rod.

2. A connection according to claim 1 characterised in that associated with the clamping eccentric (1) and the hammer-head screw (12) is a shaped member (15) of sheet metal which with a cylindrical portion (16) partially embraces the clamping eccentric (1), wherein in the apex region the cylindrical portion has a through bore (18) for the shank (11) of the hammer-head screw and adjacent the bore an arresting bar portion (17) which extends with its free end to the shank of the hammer-head screw (12).

3. A connection according to claim 2 characterised in that the cylindrical portion (16) extends over a circumferential angle of 270 °.

4. A connection according to claim 2 characterised in that the arresting bar portion (17) projects from the outside edge of the cylindrical portion (16) over the junction between two profile bars (6, 24) which are connected together at a right angle and extends with its free end to directly beneath the hammer head (19).

5. A connection according to claim 4 characterised in that the arresting bar portion (7) bears in a prestressed condition against the shank of the hammer-head screw (12).

6. A connection according to claim 1 characterised in that the hammer-head screw is provided directly beneath the hammer head (19) with abutment surfaces (20, 21) which determine the end positions, which are

5

at an angular spacing of 90 °, of the hammer-head screw.

7. A connection according to claim 6 characterised in that the free end of the arresting bar portion (17) bears against an abutment surface (20, 21).

8. A connection according to claims 2 and 4 characterised in that the arresting bar portion (17) is of a rectangular configuration in plan.

9. A connection according to claim 1 characterised in that the end face of the shank of the hammer-head screw (l2) is provided with a slot (18) or a polygonal recess for fitting of an actuating tool thereto.

10. A connection according to claim1 characterised in that the disc (2) of the clamping eccentric (1) has two diametrally oppositely disposed bores (29, 30) for receiving the pins of a pin-type wrench for actuation of the clamping eccentric.

11. A connection according to claim 1 characterised in that the width of the recess (13) in the clamping eccentric (1), which is formed by milling, corresponds to the diameter of the shank (11) of the hammer-head screw (12).

12. A connection according to claim 1 characterised in that the profile bars (6, 24) have at least one undercut, outwardly open groove (22, 23) of T-shaped cross-section, extending over the entire profile length.

13. A connection according to claim 12 characterised in that the inner portion (23), which forms the undercut configuration, of the T-shaped groove corresponds to the diameter of the shank of the hammer-head screw or the connecting rod.

14. A connection according to one of the preceding claims characterised in that in addition to the T-shaped outwardly open groove or grooves (22, 23) the profile bars (6, 24) have a central bore (25) extending in the longitudinal direction and/or bores (26)which are provided in the comer regions and which extend in the longitudinal direction.


## Revendications

1. Assemblage de deux rails profilés formant un angle entre eux ou alignés, avec un ferrage d'assemblage passant sur le joint d'assemblage entre les rails profilés, le ferrage d'assenblage présentant au moins un excentrique de serrage (1), monté tournant dans un évidement (5) cylindrique, ouvert vers l'extérieur, d'un rail profilé (6), caractérisé en ce que l'excentrique de serrage (1) est constitué de deux disques (2, 3), reliés par un pont (4) décalé par rapport au centre de l'excentrique, pourvus d'un trou de logement (7) placé de manière excentrée, pour un écrou (8) logeant l'extrémité filetée (l0) d'une vis à tête rectangulaire (l2) ou une tringle d'assemblage autre, les disques et le pont de l'excentrique de serrage délimitant, dans une forme en U, une découpe (l3) ouverte vers le pourtour de l'excentrique de serrage, dans laquelle s'étend la tige (11) de la vis à tête rectangulaire (12) ou de la tringle d'assemblage.

2. Assemblage selon la revendication 1, caractérisé en ce qu'à l'excentrique de serrage (1) et à la vis à tête rectangulaire (12) est associé un corps profilé (15) en tôle qui entoure partiellement l'excentrique de serrage (1), par un cylindre partiel (16), celui-ci présentant, dans la région du sommet, un trou débouchant (18) pour la tige (11) de la vis à tête rectangulaire et, à proximité du trou, une patte d'arrêt (17) qui, par son extrémité libre, s'étend vers la tige de la vis à tête rectangulaire (12).

3. Assemblage selon la revendication 2, caractérisé en ce que le cylindre partiel (16) présente un angle d'enroulement de 270°.

4. Assemblage selon la revendication 2, caractérisé en ce que la patte d'arrêt (17), partant du bord extérieur du cylindre partiel (16), dépasse le joint d'assemblage de deux rails profilés (6, 24) assemblés entre eux à angle droit et s'étend, avec son extrémité libre, jusque directement sous la tête rectangulaire (19).

5. Assemblage selon la revendication 4, caractérisé en ce que la patte d'arrêt (17) s'applique, sous précontrainte, contre la tige de la vis à tête rectangulaire (12).

6. Assemblage selon la revendication 1, caractérisé en ce que la vis à tête rectangulaire est pourvue, directement sous la tête rectangulaire (19), de surfaces de butée (20, 21) qui déterminent les positions de fin de course, espacées angulairement de 90°, de la vis à tête rectangulaire.

7. Assemblage selon la revendication 6, caractérisé en ce que l'extrémité libre de la patte d'arrêt (17) s'applique contre une surface de butée (20, 21).

8. Assemblage selon les revendications 2 et 4, caractérisé en ce que la patte d'arrêt (17) est de contour rectangulaire.

9. Assemblage selon la revendication 1, caractérisé en ce que la surface frontale de l'extrémité de la tige de la vis à tête rectangulaire (12) est pourvue d'une fente (18) ou d'un polygone creux en que de l'application d'un outil d'actionnement.

10. Assemblage selon la revendication 1, caractérisé en ce que le disque (2) de l'excentrique de serrage (1) présente deux trous (29, 30) diamétralement opposés l'un à l'autre, pour loger les ergots d'une clé à ergots en vue de l'actionnement de l'excentrique de serrage.

11. Assemblage selon la revendication 1, caractérisé en ce que la largeur de la découpe (13), formée par fraisage, de l'excentrique de serrage (1) correspond au diamètre extérieur de la tige (11) de la vis à tête rectangulaire (12).

12. Assemblage selon la revendication 1, caractérisé en ce que les rails profilés (6, 24) présentent au moins une rainure (22, 23) s'étendant sur toute la longueur du profilé, de section transversale en T, détalonnée, ouverte vers l'extérieur.

13. Assemblage selon la revendication 12, caractérisé en ce que la partie intérieure (23), formant le détalonnage, de la rainure en T correspond au diamètre de la tige de la vis à tête rectangulaire ou de la tringle d'assemblage.

14. Assemblage selon l'une des revendications précédentes, caractérisé en ce que les rails profilés (6, 24) comportent, en plus de la ou des rainures (22, 23) en T, ouvertes vers l'extérieur, un trou (25) central, s'étendant dans la direction longitudinale, et/ou des trous (26) prévus dans les zones d'angle, s'étendant dans la région longitudinale.

EP 0 357 985 B1

Fig.4

Fig. 3

Fig.1

Fig.2

8

Fig.6

Fig. 7

Fig. 5

*Fig. 8*

Fig. 9